(19) **Europäisches Patentamt**

**European Patent Office**

**Office européen des brevets**

(11) **EP 1 102 285 A2**

(12) **EUROPEAN PATENT APPLICATION**

(43) Date of publication:
23.05.2001 Bulletin 2001/21

(51) Int. Cl.[7]: $H01F\ 10/10$, $G02F\ 1/00$, $G11B\ 11/105$

(21) Application number: 00123219.8

(22) Date of filing: 26.10.2000

(84) Designated Contracting States:
**AT BE CH CY DE DK ES FI FR GB GR IE IT LI LU MC NL PT SE**
Designated Extension States:
**AL LT LV MK RO SI**

(30) Priority: 27.10.1999 JP 30596099
31.07.2000 JP 2000232020

(71) Applicant: **MINEBEA CO., LTD.**
**Kitasaku-gun, Nagano-ken (JP)**

(72) Inventors:
 • **Inoue, Mitsuteru**
 **Aichi-ken (JP)**
 • **Fujii, Toshitaka**
 **Aichi-ken (JP)**

 • **Takayama, Akio, c/o Minebea Co.Ltd Hamamatsu M.U.**
 **Shizuoka-ken (JP)**
 • **Kitamura, A. c/o Minebea Co.Ltd Hamamatsu M.U.**
 **Shizuoka-ken (JP)**
 • **Adachi, S., c/o Minebea Co.Ltd Hamamatsu M.U.**
 **Shizuoka-ken (JP)**
 • **Kato, Hideki, c/o Minebea Co.Ltd Hamamatsu M.U.**
 **Shizuoka-ken (JP)**

(74) Representative:
 **Patentanwälte**
 **Schaad, Balass, Menzl & Partner AG**
 **Dufourstrasse 101**
 **Postfach**
 **8034 Zürich (CH)**

(54) **Magneto-optical member**

(57) The present invention relates to a magneto-optical member (1) with which a great magneto-optical effect can be obtained. A granular film (6) (granular magneto-optical thin film) is provided between an $(SiO_2/Ta_2O_5)^n$ layer (4) and a $(Ta_2O_5/SiO_2)^n$ layer (5) to form a magneto-optical member (one-dimensional photonic crystal) (1). The granular film (6) consists of magnetic minute particles made of Co (7) and a matrix (8) which is made of $Sm_2O_3$ (a rare earth-oxide) and which surrounds the magnetic minute particles. Co and $Sm_2O_3$ are alternately sputtered at a low temperature by utilizing two target sputtering method to form the granular film (6). Thus, the granular film (6) is formed at a low temperature, and hence the disorder of the periodic structure of the $(SiO_2/Ta_2O_5)^n$ layer (4) and the $(Ta_2O_5/SiO_2)^n$ layer (5) which may be caused during heat treatment at a high temperature does not occur at all. As a result, the magneto-optical member (1) is enabled to show an intense localization of light for the light having a specific wavelength, resulting in showing both a great magneto-optical effect and a high transmissivity.

**Fig.1**

**Description**

BACKGROUND OF THE INVENTION

1. Field of the Invention

The present invention relates to a magneto-optical member used in an optical isolator for use in an optical fiber communication system, an optical measurement system, and the like.

2. Description of the Related Art

The optical isolator is constituted by a polarizer, an analyzer, a magneto-optical member that has the Faraday effect (magneto-optical effect) and that is interposed between the polarizer and the analyzer, and a magnet for applying magnetic field. The optical isolator enables transmission of outgoing light from a light source (semiconductor laser) to a transmission line such as optical fibers or the like without any loss, while it blocks reflected light from the optical fibers or the like and prevents the light from returning back to the light source (semiconductor laser).

The optical isolator which is used in an optical fiber communication system has the Faraday effect (the magneto-optical effect) with which a plane of polarization of incident light is rotated by 45 degrees, transmits light emitted from a light source such as a semiconductor laser or the like to a transmission line without any loss, and blocks reflected light from the transmission line to prevent it from returning back to the light source.

As one example of constituting the optical isolator, one-dimensional photonic crystal is known which has a multilayer structure $(SiO_2/Ta_2O_5)^n$ /BiYIG/$(Ta_2O_5/SiO_2)^n$ consisting of bismuth substituted rare earth-iron garnet (BiYIG)[a magneto-optical thin film] disposed at the center, and a lamination film [a dielectric multilayer film] of $(SiO_2/Ta_2O_5)$ and a lamination film [a dielectric multilayer film] of $(Ta_2O_5/SiO_2)$ provided on the both sides thereof as reflecting layers. In this connection, the BiYIG thin film is formed by utilizing a sputtering method or the like.

The refractive index Ns of $SiO_2$ in each of the lamination film of $(SiO_2/Ta_2O_5)$ and the lamination film of $(Ta_2O_5/SiO_2)$ is smaller than the refractive index Nt of $Ta_2O_5$, and the respective thicknesses Ds and Dt of the lamination film of $(SiO_2/Ta_2O_5)$ and the lamination film of $(Ta_2O_5/SiO_2)$ fulfill the relation of $Ns \times Ds = Nt \times Dt = \lambda/4$ . In addition, the thin film of BiYIG formulates the relation of $Nm \times Dm = \lambda$ or $\lambda/2$ where Nm is the refractive index of the BiYIG thin film and Dm is the thickness of the BiYIG thin film (per bit).

At the time when light having a specific wavelength has been made incident on a magneto-optical member (one-dimensional photonic crystal) having the above-mentioned structure, an intense localization of light occurs in the one-dimensional photonic crystal, resulting in showing a great magneto-optical effect and a high light transmissivity. In this connection, since in the one-dimensional photonic crystal, optical thin films each having optical characteristics inherent therein are laminated for a predetermined thickness, an interference film is formed in which light is localized toward the central portion. Therefore, in order to show a more intense localization of light, it is required that there be no disorder caused in the layer structures of $(SiO_2/Ta_2O_5)^n$ and $(Ta_2O_5/SiO_2)^n$[the multilayer film].

The BiYIG thin film of the above-mentioned magneto-optical member (one-dimensional photonic crystal) is, as described above, formed by utilizing a sputtering method or the like. On the other hand, the BiYIG thin film needs to be kept crystalline in order to obtain excellent magneto-optical characteristics.

Now, if the BiYIG thin film is formed at a low temperature, then its crystal structure is amorphous at the time immediately after completion of the formation.

In order to obtain excellent magneto-optical characteristics, the amorphous BiYIG thin film must be then subjected to heat treatment at 600°C or higher to be crystallized. In this connection, if the BiYIG thin film is formed by the sputtering method while the temperature of a substrate is kept raised, then a crystallized BiYIG thin film can be obtained.

However, whether in the case where the BiYIG thin film is subjected to heat treatment after completion of the formation or in the case where the BiYIG thin film is formed by the sputtering method while the substrate temperature is kept raised, the heat is inevitably applied also to the multilayer film of $(SiO_2/Ta_2O_5)^n$ to crystallize the BiYIG thin film which diffuses the layers causing the interdiffusion of $SiO_2$ and $Ta_2O_5$ in the multilayer, whereby the periodic structure of the multilayer film of $(SiO_2/Ta_2O_5)^n$ will fall into disorder. For this reason, in the magneto-optical member (one-dimensional photonic crystal) described above, it is difficult to obtain both a great magneto-optical, effect and a high transmissivity at a specific wavelength.

SUMMARY OF THE INVENTION

The present invention was made in order to solve the above-mentioned problems associated with the prior art, and it is therefore an object of the present invention to provide a magneto-optical member with which a great magneto-optical effect can be obtained.

According to one aspect of the present invention, there is provided a magneto-optical member, wherein two dielectric multilayer films are provided in each of which plural kinds of dielectric materials having different optical characteristics from each other are alternately laminated with the regularity in thickness thereof, and a granular magneto-optical thin film which is made of a matrix and magnetic minute particles is provided between the two dielectric multilayer films.

According to another aspect of the present invention, there is provided a magneto-optical member, wherein two regular lamination portions are provided in each of which magnetic substances and dielectric substances are alternately laminated with the regularity in thickness thereof, and a granular magneto-optical thin film which is made of a matrix and magnetic minute particles is provided between the two regular lamination portions.

According to still another aspect of the present invention, there is provided a magneto-optical member described in any one of the two preceding aspects, wherein the matrix has translucency at the light wavelength used.

According to yet another aspect of the present invention, there is provided a magneto-optical member described in any one of the three preceding aspects, wherein the matrix is of a non-magnetic dielectric oxide.

According to a further aspect of the present invention, there is provided a magneto-optical member described in any one of the first three preceding aspects, wherein the matrix is of a rare earth-oxide.

According to an even further aspect of the present invention, there is provided a magneto-optical member described in any one of the five preceding aspects, wherein the magnetic minute particles are of 3d metal or alloy containing 3d metal.

According to another aspect of the present invention, there is provided a magneto-optical member described in any one of the six preceding aspects, wherein the granular magneto-optical thin film is capable of magneto-optically recording.

BRIEF DESCRIPTION OF THE DRAWINGS

The above and other objects as well as the advantages of the present invention will become clear by the following description of the preferred embodiments of the present invention with reference to the accompanying drawings, wherein:

Fig. 1 is a cross sectional view showing the structure of a magneto-optical member (one-dimensional photonic crystal) according to an embodiment of the present invention;
Fig. 2 is a cross sectional view showing a structure of a granular film shown in Fig. 1;
Fig. 3 is a schematic view useful in explaining a two target sputtering method for use in the manufacture of the granular film shown in Fig. 2; and
Fig. 4 is a schematic view useful in explaining another method of forming the granular film used instead of the two target sputtering method shown in Fig. 3.

DETAILED DESCRIPTION OF THE PREFERRED EMBODIMENTS

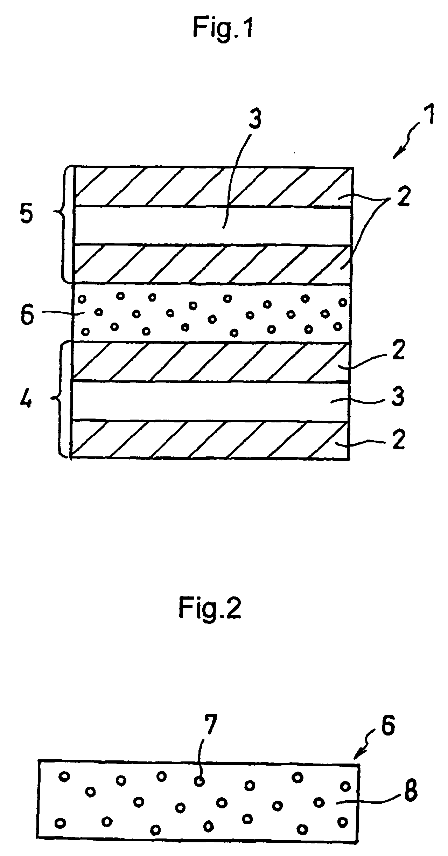

A magneto-optical member (one-dimensional photonic crystal) according to an embodiment of the present invention will be hereinafter described in detail with reference to Figs. 1 to 4.

In Fig. 1, a magneto-optical member (one-dimensional photonic crystal) 1 generally includes: an $(SiO_2/Ta_2O_5)^n$ layer 4 (dielectric multilayer film: n is the number of laminations) in which a $Ta_2O_5$ film 2 (dielectric material) and an $SiO_2$ film 3 (dielectric material) which have different optical characteristics from each other are alternately laminated with the regularity in thickness thereof; a $(Ta_2O_5/SiO_2)^n$ layer 5 (dielectric multilayer film) in which a $Ta_2O_5$ film 2 (dielectric material) and an $SiO_2$ film 3 (dielectric material) are alternately laminated with the regularity in thickness thereof; and a granular film 6 (granular magneto-optical thin film) which is provided between the $(SiO_2/Ta_2O_5)^n$ layer 4 and the $(Ta_2O_5/SiO_2)^n$ layer 5.

The granular film 6 consists, as shown in Fig. 2, of magnetic minute particles 7 and a matrix 8 surrounding the magnetic minute particles 7. Each of the magnetic minute particles 7 is made of Co (ferromagnetic 3d metal). The particle size of the magnetic minute particle 7 is set to several nm or larger in order to prevent each of the magnetic minute particles 7 from undergoing the superparamagnetism (a phenomenon that a minute particle having ferromagnetism which is decreased in size to some degree becomes para-magnetic instead of showing ferromagnetic characteristics).

In this connection, each of the magnetic minute particles 7 may also be made of other ferromagnetic 3d metals such as Ni or Fe (metal having electrons with an energy level of 3d in terms of the electron arrangement of the element), or alternatively may also be made of alloy of the 3d metal (for example, Co-Fe series alloy).

The above-mentioned matrix 8 is made of $Sm_2O_3$ (rare earth-oxide) and has translucency at the light wavelength used.

As described above, each of the magnetic minute particles 7 is made of Co, and the matrix 8 is made of $Sm_2O_3$, and hence the magneto-optical member (one-dimensional photonic crystal) 1 has $(SiO_2/Ta_2O_5)^n/Co-Sm_2O_3/(Ta_2O_5/SiO_2)^n$ structure.

The above-mentioned matrix 8 may also be, in place of $Sm_2O_3$, made of any of other rare earth oxides such as $Y_2O_3$, $Nd_2O_3$, $Gd_2O_3$, $Tb_2O_3$ and $Dy_2O_3$, or alternatively may also be made of any of oxides such as $SiO_2$, $Ta_2O_5$, and $Al_2O_3$ (each of them is a non-magnetic dielectric oxide).

In this connection, in the case where the oxide of which the matrix 8 is made has a high heat of formation and also the element is contained in which the difference in the heat of formation between that oxide and the oxide of ferromagnetic metal is large, the ferromagnetic metal phase and the oxide phase are separated into two layers, and thereby enabling formation of a granular film structure with less mutual mixture. For this reason, the two-layer separation of the ferromagnetic metal phase and the oxide phase is easier to occur in the above-mentioned rare earth-oxides ($Sm_2O_3$, $Y_2O_3$, etc.) than in the oxides such as $SiO_2$, $Ta_2O_5$, $Al_2O_3$, etc. (non-magnetic dielectric oxides). As a result, it is possible to form the granular film 6 with excellent characteristics, which is more desirable in terms of the matrix phase (the matrix 8).

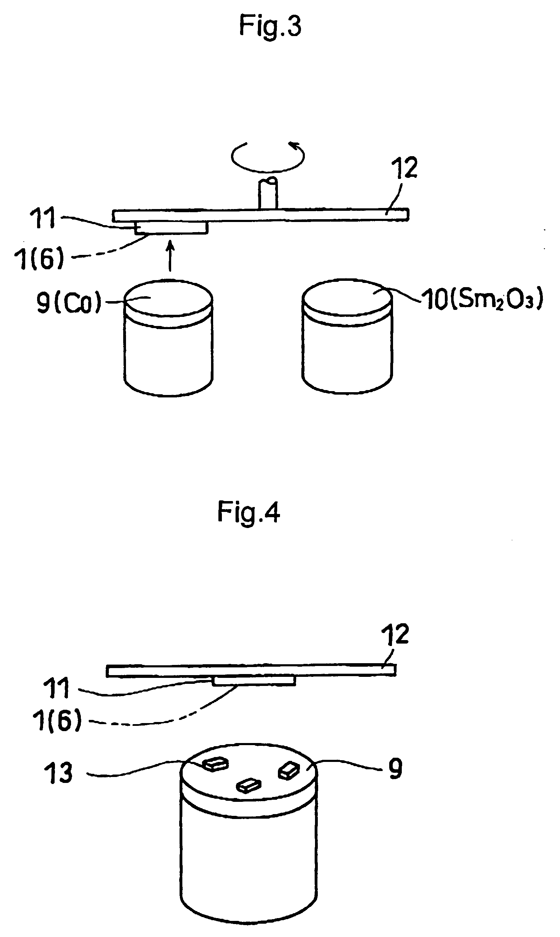

The above-mentioned granular film 6 is formed in such a way that Co and $Sm_2O_3$ are alternately sputtered at a low temperature ($500°C$ or lower, for example, in the present embodiment) by utilizing the two target sputtering method employing a target of Co 9 and a target of $Sm_2O_3$ 10 as shown in Fig. 3. In Fig. 3, reference numeral 11 designates a substrate for holding the granular film 6 and the like. The substrate 11 is attached to a rotatable substrate holding body 12, and with rotation Co and $Sm_2O_3$ are alternately sputtered as described above for film formation.

Alternatively, instead of forming the granular film 6 by the method shown in Fig. 3, the granular film 6 maybe formed by sputtering while a chip of $Sm_2O_3$ 13 is placed on the target of Co 9 as shown in Fig. 4.

In this connection, alternatively, the granular film 6 may also be formed by utilizing a two-source vacuum evaporation method employing two evaporation sources of Co and $Sm_2O_3$.

In the magneto-optical member (one-dimensional photonic crystal) 1 formed as described above, the granular film 6 is formed at a low temperature. Therefore, the interdiffusion of $SiO_2$ and $Ta_2O_5$ of the $(SiO_2/Ta_2O_5)^n$ layer 4 and the $(Ta_2O_5/SiO_2)^n$ layer 5 is not caused at all, whereby the periodic structure of the $(SiO_2/Ta_2O_5)^n$ multilayer film [of the $(SiO_2/Ta_2O_5)^n$ layer 4 and the $(Ta_2O_5/SiO_2)^n$ layer 5] does not fall into disorder at all. For this reason, the magneto-optical member 1 is enabled to show an intense localization of light for the light having a specific wavelength, resulting in showing both a great magneto-optical effect and a high transmissivity.

That is, in the prior art in which heat treatment at $600°C$ or higher is carried out in order to crystallize BiYIG in the magneto-optical member (one-dimensional photonic crystal) having the $(SiO_2/Ta_2O_5)^n$ /BiYIG/$(Ta_2O_5/SiO_2)^n$ structure, the $(SiO_2/Ta_2O_5)^n$ multilayer film is also heated to cause the interdiffusion of $SiO_2$ and $Ta_2O_5$ so that the periodic structure of the $(SiO_2/Ta_2O_5)^n$ multilayer film may fall into disorder. However, in accordance with the above-mentioned embodiment of the invention, since the periodic structure of the $(SiO_2/Ta_2O_5)^n$ multilayer film does not fall into disorder at all, it is possible to obtain both a great magneto-optical effect and a high transmissivity.

In addition, the magneto-optical member (one-dimensional photonic crystal) 1 has a great magneto-optical, effect and can obtain the Faraday rotation angle of 45 degrees as described above, and therefore can be used as an optical isolator.

In the above mentioned embodiment, two dielectric multilayer films [of the $(SiO_2/Ta_2O_5)^n$ layer 4 and the $(Ta_2O_5/SiO_2)^n$ layer 5] are provided in each of which plural kinds of dielectric materials having different optical characteristics from each other are alternately laminated with the regularity in thickness thereof. However, alternatively, two regular lamination portions may also be provided in each of which magnetic substance and dielectric substance are alternately laminated with the regularity in thickness thereof.

In addition, in the above-mentioned embodiment, the granular film 6 may be formed in such a way as to be capable of magneto-optically recording, whereby the magneto-optical member (one-dimensional photonic crystal) 1 is enabled to be used as a magneto-optical recording medium.

As set forth hereinabove, according to one aspect of the present invention, two dielectric multilayer films are provided in each of which plural kinds of dielectric materials having different optical characteristics from each other are alternately laminated with the regularity in thickness thereof, and a granular magneto-optical thin film which is made of a matrix and magnetic minute particles is provided between the two dielectric multilayer films. Therefore, the granular magneto-optical thin film can be formed at a low temperature. As a result, the interdiffusion of plural kinds of dielectric materials which may be caused during heat treatment at a high temperature does not occur at all and also the periodic structure of the dielectric multilayer film does not fall into disorder at all. For this reason, the magneto-optical member of the invention is enabled to show an intense localization of light for the light having a specific wavelength, resulting in showing both a great magneto-optical effect and a high transmissivity.

In addition, according to another aspect of the present invention, two regular lamination portions are provided in each of which magnetic substances and dielectric substances are alternately laminated with the regularity in thickness thereof, and a granular magneto-optical thin film which is made of a matrix and magnetic minute particles is provided between the two regular lamination portions. Therefore, the granular magneto-optical thin film can be formed at a low temperature. As a result, the interdiffusion of plural kinds of dielectric materials which may be caused during heat treatment at a high temperature does not occur at all and also the periodic structure of the dielectric multilayer film does not fall into disorder at all. For this reason, the magneto-optical member is enabled to show an intense localization of light for the light having a specific wavelength, resulting in showing both a great magneto-optical effect and a high transmissivity.

While the present invention has been particularly shown and described with reference to the preferred embodiment and the modifications thereof, it will be understood that various changes and other modifications will occur to those skilled in the art without departing from the scope and true spirit of the invention. The scope of the invention is therefore to be determined solely by the appended claims.

**Claims**

1. A magneto-optical member, wherein two dielectric multilayer films are provided in each of which plural kinds of dielectric materials having different optical characteristics from each other are alternately laminated with the regularity in thickness thereof, and a granular magneto-optical thin film which is made of a matrix and magnetic minute particles is provided between said two dielectric multilayer films.

2. A magneto-optical member, wherein two regular lamination portions are provided in each of which magnetic substances and dielectric substances are alternately laminated with the regularity in thickness thereof, and a granular magneto-optical thin film which is made of a matrix and magnetic minute particles is provided between said two regular lamination portions.

3. A magneto-optical member according to claim 1 or 2, wherein said matrix has translucency for light wavelength used.

4. A magneto-optical member according to any one of claims 1 to 3, wherein said matrix is made of a non-magnetic dielectric oxide.

5. A magneto-optical member according to any one of claims 1 to 3, wherein said matrix is made of a rare earth-oxide.

6. A magneto-optical member according to any one of claims 1 to 5, wherein said magnetic minute particles are made of 3d metal or alloy containing 3d metal.

7. A magneto-optical member according to any one of claims 1 to 6, wherein said granular magneto-optical thin film is capable of magneto-optically recording.

Fig.1

Fig.2

## Fig.3

## Fig.4